# EUROPÄISCHE PATENTSCHRIFT

(11) **EP 3 181 247 B1**
(45) Veröffentlichungstag und Bekanntmachung des Hinweises auf die Patenterteilung: **25.03.2020**
(21) Anmeldenummer: 15200098.0
(22) Anmeldetag: 15.12.2015
(51) Int. Cl.: B07B 1/04, B07B 13/00, B07B 13/04, B07B 13/16, B07C 5/08, B07C 5/344, B29B 17/02

(54) **ZUFÜHRVORRICHTUNG UND VERFAHREN ZUM ZUFÜHREN VON SCHÜTTGUT IN EINE SCHNECKENMASCHINE, WOBEI METALLTEILE AUS DEM SCHÜTTGUT ENTFERNT WERDEN**
FEEDER DEVICE AND METHOD FOR FEEDING BULK MATERIAL INTO A WORM MACHINE
DISPOSITIF D'AMENEE ET PROCEDE D'AMENEE DE MATIERES EN VRAC DANS UNE MACHINE A VIS SANS FIN

(43) Veröffentlichungstag der Anmeldung: 21.06.2017
(73) Patentinhaber: Coperion GmbH, 70469 Stuttgart (DE)
(72) Erfinder: Ahlgrimm, Michael, 74354 Besigheim (DE); Bauer, Karl-Andreas, 72070 Tübingen (DE); Rotter, Bernhard, 74391 Erligheim (DE)
(74) Vertreter: Rau, Schneck & Hübner Patentanwälte Rechtsanwälte PartGmbB

(56) Entgegenhaltungen:
- CH-A5- 685 503
- DE-C1- 3 931 579
- US-A- 4 805 266
- Sesotec: "Protector", , 13. Oktober 2009 (2009-10-13), Seiten 1-2, XP055279028, company webpage Gefunden im Internet: URL:http://www.sesotec.com/de/datasheet/pr otector/ [gefunden am 2016-06-09]
- Sesotec: "GM Gitter-Magnet für Schüttgüter", , 9. April 2015 (2015-04-09), XP055279118, Gefunden im Internet: URL:http://www.sesotec.com/inc/functions/f ile.inc.php?id=571&gittermagnet-pr-de.pdf [gefunden am 2016-06-09]
- Produktionssicherheit S+s Separation: "S+S Separation and Sorting Technology GmbH Optimaler Werkzeug-und Maschinen-Schutz in der Kunststoff-Industrie Induktive Metall-Detektoren Induktive Metall-Separatoren Magnet-Separatoren", , 8. Juli 2011 (2011-07-08), XP055279235, Gefunden im Internet: URL:http://www.sesotec.com/inc/file.inc.ph p?id=93 [gefunden am 2016-06-09]

## Beschreibung

Die Erfindung betrifft eine Zuführvorrichtung zum Zuführen von Schüttgut in eine Schneckenmaschine gemäß dem Oberbegriff des Anspruchs 1. Ferner betrifft die Erfindung ein Verfahren zum Zuführen von Schüttgut in eine Schneckenmaschine.

Metallpartikel, die sich im Schüttgut-Förderstrom von Schneckenmaschinen befinden, sind problematisch, da diese regelmäßig Beschädigungen in der Schneckenmaschine verursachen und dementsprechend zu hohen Ausfall- und Reparaturkosten führen.

Aus der DE 296 19 173 U1 ist ein Metallseparator bekannt, bei dem Metallpartikel in einem Förderstrom aus nicht metallischen Partikeln mittels einer Induktionsspule detektiert werden. Die Metallpartikel werden anschließend vor der Zuführung in einen Extruder oder eine Spritzgussmaschine ausgeschleust. Hierzu wird der Förderstrom mittels einer Absaugleitung gesperrt, wobei Metallpartikel aufgrund der Schwerkraft bis zu einer mechanischen Sperre fallen und dort ausgeschleust werden. Durch das Ausschleusen von Metallpartikeln wird in unvorhersehbarer Weise die kontinuierliche und konstante Zuführung des aufzubereitenden Schüttguts beeinträchtigt.

Aus der CH 685 503 A5 ist eine Vorrichtung gemäß dem Oberbegriff des Patentanspruchs 1 zum Ausscheiden von Metallteilen aus einem Materialstrom bekannt. Sobald ein Metallteil einen Detektor passiert, wird über eine Steuervorrichtung ein Steuerventil aktiviert und ein Pneumatikzylinder angesteuert, der eine Pneumatikklappe aus einer Öffnungsstellung in eine Schließstellung schwenkt. In Folge des entstehenden Staudrucks wird eine Federklappe zu einem Ausscheidebehälter geöffnet und die Strömung durch den Ausscheidebehälter gelenkt. In dem Ausscheidebehälter ist ein Sieb fest angeordnet, das das detektierte Metallteil entfernt.

Aus der US 4,805,266 A ist eine Vorrichtung zum Ermitteln von Fremdkörpern, wie beispielsweise Metallteilen, in Fasern bekannt. Mehrere nebeneinander angeordnete Sensoren detektieren in einem Faserflockenvlies Fremdkörper in Form von Metallteilen. Zum Ausscheiden eines detektierten Fremdkörpers wird das Faserflockenvlies in einen Behälter umgeleitet.

Aus der DE 39 31 579 C1 ist eine Vorrichtung zum Abscheiden von Metallteilen aus einem Förderstrom von körnigem oder pulvrigem Kunststoff bekannt. Die Vorrichtung weist einen Metalldetektor sowie eine Weiche auf, die mittels eines Betätigungsorgans linear verlagert wird, wenn ein Metallteil im Förderstrom detektiert wird.

Der Erfindung liegt die Aufgabe zugrunde, eine Zuführvorrichtung zum Zuführen von Schüttgut in eine Schneckenmaschine zu schaffen, die auf einfache und zuverlässige Weise das Entfernen von Metallpartikeln in Verbindung mit der Erhaltung eines kontinuierlichen und möglichst konstanten Förderstroms ermöglicht.

Diese Aufgabe wird durch eine Zuführvorrichtung mit den Merkmalen des Anspruchs 1 gelöst. Durch das Siebelement werden einerseits detektierte Metallpartikel aus dem Schüttgut-Förderstrom entfernt und andererseits der Schüttgut-Förderstrom nicht unterbrochen, da das Schüttgut während des Entfernens der Metallpartikel durch die Durchtrittsöffnungen tritt und somit kontinuierlich Schüttgut in eine nachgeordnete Schneckenmaschine zuführbar ist. Der Begriff Schüttgut-Förderstrom bezeichnet das strömende Schüttgut. Erfindungsgemäß wurde erkannt, dass Metallpartikel, die Beschädigungen in der nachgeordneten Schneckenmaschine verursachen, eine Partikelgröße derart haben, dass diese von dem Schüttgut trennbar sind. Das Schüttgut ist insbesondere als Granulat und/oder Pulver mit einer durchschnittlichen Schüttgut-Partikelgröße, insbesondere mit einer maximalen Schüttgut-Partikelgröße ausgebildet, die kleiner als eine zulässige Partikelgröße und/oder detektierbare Partikelgröße der Metallpartikel ist. Die Zuführleitung ist insbesondere als Fallleitung ausgebildet, sodass das Schüttgut und darin befindliche Metallpartikel sich zumindest auch aufgrund der Schwerkraft in der Förderrichtung bewegen. Die Zuführleitung verläuft vorzugsweise durch einen von der Induktionsspule begrenzten Innenraum. Die Induktionsspule umgibt also vorzugsweise die Zuführleitung. Die Induktionsspule ist insbesondere zylinderförmig und/oder spiralförmig ausgebildet. Das Siebelement ist der Induktionsspule in der Förderrichtung nachgeordnet, sodass dieses in Abhängigkeit eines detektierten Metallpartikels in den Schüttgut-Förderstrom verlagerbar ist und das detektierte Metallpartikel aus dem Schüttgut-Förderstrom entfernen kann. Hierzu ist ein Abstand zwischen der Induktionsspule und dem Siebelement so gewählt, dass das Siebelement rechtzeitig in den Schüttgut-Förderstrom verlagerbar ist, bevor das detektierte Metallpartikel das Siebelement passiert. Das Siebelement ist beispielsweise als Lochblende oder als Siebgewebe ausgebildet.

Das Siebelement ist beispielsweise aus Edelstahl hergestellt. Die erfindungsgemäße Zuführvorrichtung ermöglicht somit einerseits ein einfaches und zuverlässiges Entfernen von Metallpartikeln aus dem Schüttgut-Förderstrom und vermeidet andererseits eine Unterbrechung des Schüttgut-Förderstroms, sodass eine kontinuierliche und weitestgehend konstante Zuführung von Schüttgut in eine nachgeordnete Schneckenmaschine gewährleistet ist.

Eine Zuführvorrichtung nach Anspruch 2 gewährleiste ein einfaches und schnelles Entfernen von Metallpartikeln. Mittels des Betätigungsantriebs ist das Siebelement quer, insbesondere senkrecht, zu der Förderrichtung linear verlagerbar, sodass das Siebelement einerseits schnell in den Schüttgut-Förderstrom einfahrbar und andererseits schnell aus dem Schüttgut-Förderstrom ausfahrbar ist. Der Betätigungsantrieb ist insbesondere als Linearantrieb ausgebildet, beispielsweise als elektrodynamischer bzw. elektromagnetischer, hydraulischer oder pneumatischer Linearantrieb. Der Betätigungsantrieb ist insbesondere derart ausgebildet, dass für eine Verfahrzeit Δt_{V} von einer Ruheposition, in der sich das Siebelement nicht in dem Schüttgut-Förderstrom befindet, in eine Betriebsposition, in der sich das Siebelement vollständig in dem Schüttgut-Förderstrom befindet, gilt: Δt_{V} ≤ 2 s, insbesondere Δt_{V} ≤ 1,5 s, insbesondere Δt_{V} ≤ 1 s, und insbesondere Δt_{V} ≤ 0,5 s. Für die Verfahrzeit Δt_{V} gilt im Verhältnis zu einer Förderzeit Δt_{S} des Schüttguts von der Induktionsspule bis zu dem Siebelement: Δt_{V} < Δt_{S}. Das Siebelement ist vorzugsweise aus einem metallischen Material ausgebildet.

Eine Zuführvorrichtung nach Anspruch 3 gewährleistet ein einfaches und zuverlässiges Entfernen von Metallpartikeln in Verbindung mit einem weitestgehend konstanten Schüttgut-Förderstrom. Durch die polygonale Querschnittsform der Durchtrittsöffnungen hat das Siebelement einerseits eine große freie Durchtrittsquerschnittsfläche und andererseits eine ausreichende mechanische Stabilität. Die Durchtrittsöffnungen sind vorzugsweise rechteckig, insbesondere quadratisch, ausgebildet.

Eine Zuführvorrichtung nach Anspruch 4 gewährleistet ein einfaches und zuverlässiges Entfernen von schädlichen Metallpartikeln aus dem Schüttgut-Förderstrom. Die minimale Querschnittsabmessung D ist insbesondere größer als eine maximale Partikelgröße des Schüttguts.

Eine Zuführvorrichtung nach Anspruch 5 gewährleistet in einfacher Weise ein zuverlässiges Entfernen von Metallpartikeln. Durch die Begrenzungswand wird verhindert, dass ein auf der stromaufwärtigen Seite des Siebelementes befindliches Metallpartikel aufgrund der schnellen Verfahrbewegung des Siebelements wieder in den Schüttgut-Förderstrom gelangt. Durch die schnelle Verfahrbewegung des Siebelements besteht die Gefahr, dass ein auf dem Siebelement befindliches Metallpartikel seitlich von dem Siebelement rutscht. Die Begrenzungswand ist insbesondere umlaufend ausgebildet, so dass das Siebelement als Auffangkorb ausgebildet ist. Vorzugsweise ist das Siebelement in einem Siebelement-Rahmen angeordnet, der die Begrenzungswand ausbildet.

Eine Zuführvorrichtung nach Anspruch 6 gewährleistet ein einfaches und zuverlässiges Entfernen von Metallpartikeln aus dem Schüttgut-Förderstrom. Dadurch, dass die Querschnittsform des Siebelements in einer in dem Schüttgut-Förderstrom befindlichen Betriebsposition die Querschnittsform der Zuführleitung überdeckt, ist gewährleistet, dass Metallpartikel nicht seitlich an dem Siebelement vorbei strömen können.

Eine Zuführvorrichtung nach Anspruch 7 gewährleistet ein einfaches und zuverlässiges Entfernen von Metallpartikeln aus dem Schüttgut-Förderstrom. Dadurch, dass das Siebelement magnetisiert ist, können magnetisierbare Metallpartikel sicher aufgefangen und auf dem Siebelement gehalten werden. Weiterhin können magnetisierbare Metallpartikel aufgefangen werden, deren Partikelgröße kleiner als die minimale Querschnittsabmessung der Durchtrittsöffnungen ist.

Eine Zuführvorrichtung nach Anspruch 8 gewährleistet ein einfaches und zuverlässiges Entfernen von schädlichen Metallpartikeln in Verbindung mit der Erhaltung eines weitestgehend konstanten Schüttgut-Förderstroms. Die Induktionsspule stellt beim Detektieren eines Metallpartikels der Steuereinrichtung eine Detektionssignal bereit. Das Detektionssignal wird von der Steuereinrichtung hinsichtlich der vordefinierten Mindest-Partikelgröße ausgewertet. Die Steuereinrichtung erzeugt ein Ansteuersignal zum Verlagern des Siebelements nur dann, wenn die Auswertung des Detektionssignals ergibt, dass das detektierte Metallpartikel die vordefinierte Mindest-Partikelgröße überschreitet. Mit dem Ansteuersignal wird der Betätigungsantrieb angesteuert, sodass das detektierte Metallpartikel von dem Siebelement erfasst und entfernt wird. Durch diese Auswertung ist gewährleistet, dass das Siebelement nur dann in den Schüttgut-Förderstrom verlagert wird, wenn das detektierte Metallpartikel eine Partikelgröße derart hat, dass es für die Schneckenmaschine schädigend ist und von dem Siebelement erfasst und entfernt werden kann. Metallpartikel mit einer Partikelgröße derart, dass diese nicht schädigend sind oder durch die Durchtrittsöffnungen treten können und somit nicht erfasst werden können, lösen somit keine Verlagerung des Siebelements aus.

Eine Zuführvorrichtung nach Anspruch 9 gewährleistet ein einfaches und zuverlässiges Entfernen von Metallpartikeln. Detektiert die Induktionsspule ein Metallpartikel und stellt der Steuereinrichtung ein entsprechendes Detektionssignal bereit, so erzeugt die Steuereinrichtung ein erstes Ansteuersignal zum Verlagern des Siebelements in den Schüttgut-Förderstrom. Mittels des Ansteuersignals wird der Betätigungsantrieb angesteuert. Ausgehend von dem ersten Ansteuersignal wird nach einer vordefinierten Zeitdauer von der Steuereinrichtung ein zweites Ansteuersignal zum Verlagern des Siebelements aus dem Schüttgut-Förderstrom erzeugt. Mittels des zweiten Ansteuersignals wird der Betätigungsantrieb angesteuert. Die Ansteuersignale dienen somit zum Einfahren des Siebelements in den Schüttgut-Förderstrom und zum Ausfahren des Siebelements aus dem Schüttgut-Förderstrom. Die vordefinierte Zeitdauer ist so in der Steuereinrichtung eingestellt, dass das detektierte Metallpartikel einerseits zuverlässig erfasst wird und andererseits sich das Siebelement so kurz wie erforderlich in dem Schüttgut-Förderstrom befindet. Durch Einstellen der vordefinierten Zeitdauer kann das Entfernen von Metallpartikeln optimiert werden. Für die vordefinierte Zeitdauer Δt gilt insbesondere: 0,5 s ≤ Δt ≤ 3 s, insbesondere 1 s ≤ Δt ≤ 2 s.

Eine Zuführeinrichtung nach Anspruch 10 gewährleistet ein einfaches und zuverlässiges Entfernen von Metallpartikeln. Das Gehäuse weist insbesondere senkrecht zu der Förderrichtung eine Querschnittsform auf, die sich nach dem Siebelement in der Förderrichtung zumindest abschnittsweise verjüngt. Hierdurch ist gewährleistet, dass - nachdem ein Metallpartikel aus dem Schüttgut-Förderstrom entfernt wurde - auf dem Siebelement befindliches Schüttgut durch die Durchtrittsöffnungen treten kann und wieder dem Schüttgut-Förderstrom zugeführt werden kann. Das auf dem Siebelement befindliche Schüttgut wird beispielsweise durch Vibrationen zu den Durchtrittsöffnungen bewegt, sodass das Schüttgut in der Ruheposition durch das Siebelement bzw. die Durchtrittsöffnungen treten kann. Durch das Sichtfenster kann eine Bedienperson den Zustand des Siebelements sichten und insbesondere feststellen, ob bereits ein Metallpartikel aus dem Schüttgut-Förderstrom entfernt wurde oder nicht.

Eine Zuführvorrichtung nach Anspruch 11 gewährleistet in einfacher Weise ein Entfernen von Metallpartikeln. Durch die Öffnung kann ein auf dem Siebelement befindliches Metallpartikel in einfacher Weise manuell entfernt werden. Das Siebelement befindet sich hierfür in der Ruheosition, also außerhalb des Schüttgut-Förderstroms. Durch das Abdeckelement ist in einfacher Weise ein Personenschutz gewährleistet. Dadurch, dass mittels des Abdeckelements die Öffnung insbesondere gasdicht verschließbar ist, kann in dem Gehäuse bei Bedarf eine Schutzgasatmosphäre erzeugt werden. Vorzugsweise ist das Sichtfenster in dem Abdeckelement ausgebildet. Das Abdeckelement ist insbesondere als verschwenkbare Abdeckklappe ausgebildet.

Eine Zuführvorrichtung nach Anspruch 12 gewährleistet ein sicheres Entfernen von Metallpartikeln. Durch das Detektionselement wird ein Zustandssignal erzeugt, das einen geöffneten Zustand des Abdeckelements charakterisiert. Das Zustandssignal wird der Steuereinrichtung bereitgestellt, die insbesondere bei geöffnetem Zustand des Abdeckelements ein Verlagern des Siebelements deaktiviert. Das Deaktivieren kann beispielsweise derart erfolgen, dass die Steuereinrichtung ein Ansteuern des Betätigungsantriebs verhindert.

Eine Zuführvorrichtung nach Anspruch 13 ermöglicht eine Zuführung von Schüttgut unter einer Schutzgasatmosphäre. Die Schutzgas-Zuführleitung mündet beispielsweise in das Gehäuse der Entfernungseinrichtung. Vorzugsweise ist die Steuereinrichtung derart ausgebildet, dass anhand des von dem Detektionselement bereitgestellten Zustandssignals, das einen geöffneten Zustand des Abdeckelements signalisiert, die Schutzgas-Zuführleitung absperrbar ist. Wird also das Abdeckelement geöffnet, so stellt das Detektionselement dies fest und stellt der Steuereinrichtung das entsprechende Zustandssignal bereit. Die Steuereinrichtung steuert dann ein Absperrventil der Schutzgas-Zuführleitung an, das die Schutzgas-Zuführleitung absperrt und beispielsweise auch die Schneckenmaschine stoppt.

Eine Aufbereitungsanlage nach Anspruch 14 gewährleistet in einfacher Weise einen zuverlässigen und produktiven Betrieb der Schneckenmaschine. Durch die Zuführvorrichtung wird der Schneckenmaschine kontinuierlich und mit einer weitestgehend konstanten Förderrate Schüttgut zugeführt. Die Schneckenmaschine schädigende Metallpartikel werden einfach und zuverlässig aus dem Schüttgut-Förderstrom entfernt.

Der Erfindung liegt ferner die Aufgabe zugrunde, ein Verfahren zum Zuführen von Schüttgut in eine Schneckenmaschine zu schaffen, das auf einfache und zuverlässige Weise das Entfernen von Metallpartikeln in Verbindung mit der Erhaltung eines kontinuierlichen und weitestgehend konstanten Förderstroms ermöglicht.

Diese Aufgabe wird durch ein Verfahren mit den Merkmalen des Anspruchs 15 gelöst. Die Vorteile des erfindungsgemäßen Verfahrens entsprechen den bereits beschriebenen Vorteilen der erfindungsgemäßen Zuführvorrichtung. Das erfindungsgemäße Verfahren kann insbesondere mit den Merkmalen der Ansprüche 1 bis 14 weitergebildet werden.

Weitere Merkmale, Vorteile und Einzelheiten der Erfindung ergeben sich aus der nachfolgenden Beschreibung eines Ausführungsbeispiels. Es zeigen:

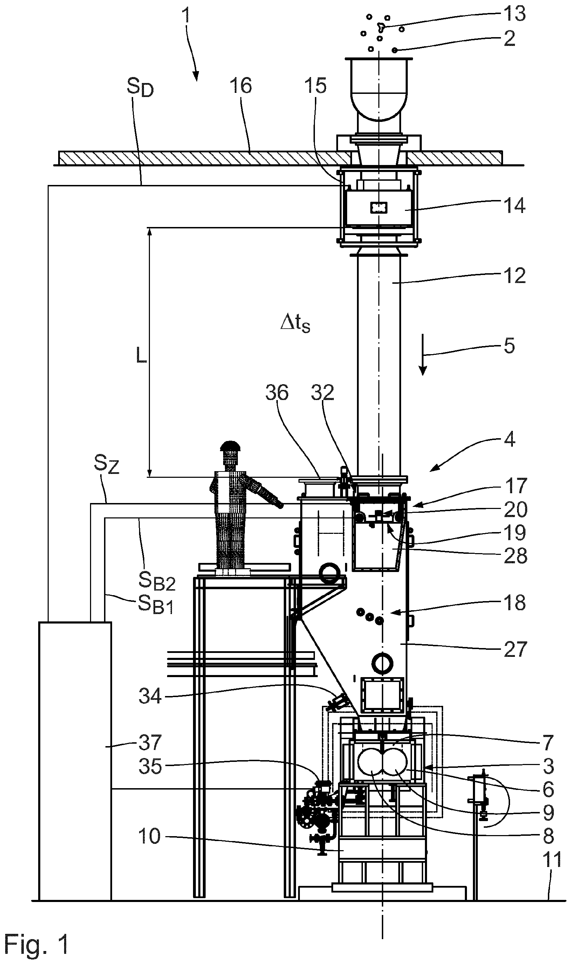

- Fig. 1: eine Aufbereitungsanlage zur Aufbereitung von Schüttgut mit einer Schneckenmaschine und einer in die Schneckenmaschine mündenden Zuführvorrichtung,

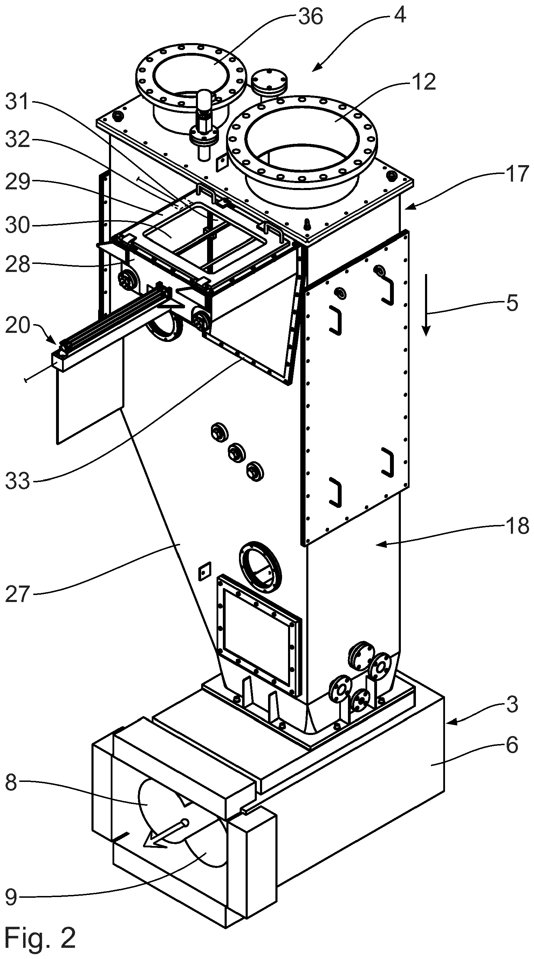

- Fig. 2: eine perspektivische Ansicht einer Entfernungseinrichtung der Zuführvorrichtung zum Entfernen von Metallpartikeln aus dem strömenden Schüttgut, und
- Fig. 3: eine Draufsicht auf ein Siebelement der Entfernungseinrichtung in Fig. 2.

Eine Aufbereitungsanlage 1 zur Aufbereitung von Schüttgut 2 umfasst eine Schneckenmaschine 3 und eine Zuführvorrichtung 4. Die Zuführvorrichtung 4 ist in einer Förderrichtung 5 des Schüttguts 2 vor der Schneckenmaschine 3 angeordnet und mündet in diese ein. Hierzu ist in einem Gehäuse 6 der Schneckenmaschine 3 eine Zuführöffnung 7 ausgebildet, die in mindestens eine Gehäusebohrung 8, 9 der Schneckenmaschine 3 mündet.

Die Schneckenmaschine 3 ist bekannt und üblich. Die Schneckenmaschine 3 ist beispielsweise als Mehrwellen-Schneckenmaschine, insbesondere als Zweiwellen-Schneckenmaschine, ausgebildet, bei der in den Gehäusebohrungen 8, 9 gleichsinnig drehantreibbare und einander dicht kämmende Behandlungselementwellen angeordnet sind. Die Schneckenmaschine 3 umfasst ein Grundgestell 10, das an einer Bodenplatte 11 befestigt ist.

Die Zuführvorrichtung 4 umfasst eine Zuführleitung 12 zum Führen des in der Förderrichtung 5 strömenden Schüttguts 2. Das in der Förderrichtung 5 strömende Schüttgut 2 ist nachfolgend auch als Schüttgut-Förderstrom bezeichnet. Die Zuführleitung 12 ist als Fallleitung ausgebildet, verläuft also in Richtung der Schwerkraft.

Zum Detektieren von unerwünschten und die Schneckenmaschine 3 schädigenden Metallpartikeln 13 weist die Zuführvorrichtung 4 eine Induktionsspule 14 auf. Die Induktionsspule 14 ist zylinderförmig und/oder spiralförmig ausgebildet und umgibt die Zuführleitung 12. Die Induktionsspule 14 ist insbesondere konzentrisch zu der Zuführleitung 12 angeordnet. Die Induktionsspule 14 ist in einem Gehäuse 15 angeordnet, das beispielsweise an der Zuführleitung 12 und/oder an einem Traggestell 16 befestigt ist.

Die Zuführvorrichtung 4 umfasst weiterhin eine Entfernungseinrichtung 17 zum Entfernen der detektierten Metallpartikel 13 aus dem strömenden Schüttgut 2. Die Entfernungseinrichtung 17 weist ein Gehäuse 18 auf, in dem ein Siebelement 19 verlagerbar ist. Das Siebelement 19 ist mittels eines Betätigungsantriebs 20 linear und quer, insbesondere senkrecht, zu der Förderrichtung 5 verfahrbar. Der Betätigungsantrieb 20 ist pneumatisch ausgebildet, also als pneumatisch betätigbare Kolben-Zylinder-Einheit. Der Betätigungsantrieb 20 ist an einer Außenseite des Gehäuses 18 befestigt.

Das Siebelement 19 weist eine Vielzahl von Durchtrittsöffnungen 21 auf, die durch Längsstreben 22 und Querstreben 23 begrenzt sind. Das Siebelement 19 kann beispielsweise derart hergestellt werden, dass die Durchtrittsöffnungen 21 aus einem plattenförmigen Körper ausgestanzt werden. Die Durchtrittsöffnungen 21 haben jeweils eine polygonale Querschnittsform. Die Querschnittsform ist beispielsweise rechteckig, insbesondere quadratisch. Die Durchtrittsöffnungen 21 haben weiterhin jeweils eine minimale Querschnittsabmessung D, wobei gilt: 1 mm ≤ D ≤ 12 mm, insbesondere 2 mm ≤ D ≤ 8 mm, insbesondere 3 mm ≤ D ≤ 7 mm, und insbesondere 4 mm ≤ D ≤ 6 mm.

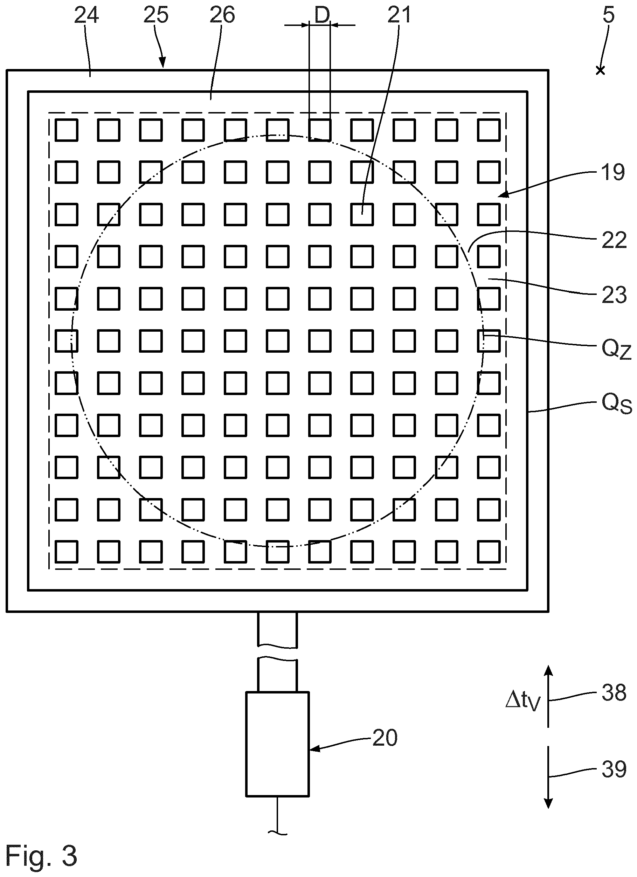

An einer stromaufwärtigen Seite ist das Siebelement 19 von einer Begrenzungswand 24 seitlich begrenzt. Die Begrenzungswand 24 läuft um das Siebelement 19 um und ist Teil eines Siebelement-Rahmens 25, der durch die Begrenzungswand 24 und einen endseitig daran angeordneten Auflagesteg 26 gebildet ist. Das Siebelement 19 ist auf dem Auflagesteg 26 angeordnet und nach allen Seiten von der entlang der Förderrichtung 5 überstehenden Begrenzungswand 24 begrenzt. Das Siebelement 19 bildet somit einen Fangkorb aus, mit dem schädliche Metallpartikel 13 von dem Schüttgut 2 abgetrennt werden können. Zur sicheren Befestigung kann das Siebelement 19 an dem Siebelement-Rahmen 25 fixiert, beispielsweise verschraubt sein. Das Siebelement 19 weist eine äußere Querschnittsform Q_{S} auf, die eine äußere Querschnittsform Q_{Z} der Zuführleitung 12 überdeckt. Die Querschnittsformen Q_{S} und Q_{Z} sind in Fig. 3 veranschaulicht.

Das Siebelement 19 ist aus einem metallischen Material, beispielsweise aus Stahl ausgebildet. Das Siebelement 19 ist magnetisiert oder unmagnetisiert ausgebildet. Das Siebelement 19 weist eine Materialdicke zwischen 0,5 mm und 3 mm, insbesondere zwischen 1 mm und 2 mm auf. Alternativ kann das Siebelement 19 aus einem Kunststoffmaterial oder einem Keramikmaterial ausgebildet sein.

Das Gehäuse 18 weist einen Gehäuse-Grundkörper 27 und einen seitlich daran angeordneten Gehäuse-Fortsatz 28 auf. In einer Ruheposition, in der das Siebelement 19 außerhalb des Schüttgut-Förderstroms angeordnet ist, befindet sich das Siebelement 19 in einem durch den Gehäuse-Fortsatz 28 teilweise begrenzten Innenraum. An einer Oberseite weist der Gehäuse-Fortsatz 28 ein schwenkbares Abdeckelement 29 in Form einer Abdeccklappe auf. In dem Abdeckelement 29 ist ein Sichtfenster 30 ausgebildet. Das Abdeckelement 29 verschließt im geschlossenen Zustand eine Öffnung 31, die einen Zugang zu dem in der Ruheposition befindlichen Siebelement 19 ermöglicht. Die Öffnung 31 ist durch das Abdeckelement 29 insbesondere gasdicht verschließbar.

Der Gehäuse-Fortsatz 28 verjüngt sich in der Förderrichtung 5. Hierzu verläuft ein Boden 33 des Gehäuse-Fortsatzes 28 in Form einer schrägen Ebene in Richtung des Gehäuse-Grundkörpers 27. Hierdurch wird Schüttgut 2, das in der Ruheposition des Siebelements 19 durch die Durchtrittsöffnungen 21 tritt, wieder dem Schüttgut-Förderstrom zugeführt.

Zum Detektieren eines geöffneten Zustands des Abdeckelements 29 weist die Entfernungseinrichtung 17 ein Detektionselement 32 auf, das mit dem Abdeckelement 29 zusammenwirkt. Das Detektionselement 32 ist beispielsweise als elektrischer Kontakt ausgebildet.

Zur Ausbildung einer Schutzgasatmosphäre weist die Zuführvorrichtung 4 eine Schutzgas-Zuführleitung 34 auf. Die Schutzgas-Zuführleitung 34 mündet in das Gehäuse 18. In der Schutzgas-Zuführleitung 34 ist ein automatisch betätigbares Absperrventil 35 angeordnet. Zum Entlüften ist in dem Gehäuse 18 weiterhin eine Entgasungsöffnung 36 ausgebildet, die je nach Bedarf geöffnet oder geschlossen werden kann.

Die Induktionsspule 14 ist in Signalverbindung mit einer Steuereinrichtung 37, die zum Ansteuern der Entfernungseinrichtung 17 dient. Zum Ansteuern der Entfernungseinrichtung 17 ist die Steuereinrichtung 37 in Signalverbindung mit dem Betätigungsantrieb 20 und mit dem Detektionselement 32. Die Steuereinrichtung 37 ist weiterhin in Signalverbindung mit dem Absperrventil 35, der Entgasungsöffnung 36 und der Schneckenmaschine 3.

Die Zuführvorrichtung 4 kann beispielsweise derart ausgelegt werden, dass schädliche Metallpartikel 13 ab einer Partikelgröße von mindestens 6 mm, insbesondere von mindestens 3 mm detektierbar und aus dem Schüttgut-Förderstrom abtrennbar sind. Die Durchtrittsöffnungen 21 weisen beispielsweise eine minimale Querschnittsabmessung D von 5 mm auf. Mit einem derartigen Siebelement 19 können schädliche Metallpartikel 13 zumindest mit einer Partikelgröße von mindestens 6 mm aus dem Schüttgut-Förderstrom entfernt werden. Das Schüttgut 2 hat beispielsweise eine maximale Partikelgröße von 1,6 mm. Ein d50-Wert der Partikelgrößenverteilung des Schüttguts 2 beträgt beispielsweise zwischen 50 µm und 800 µm, das bedeutet, dass 50 % des Schüttguts 2 bzw. der Schüttgutpartikel in dem erwähnten Bereich liegen.

Die Funktionsweise der Aufbereitungsanlage 1 ist wie folgt:
Im störungsfreien Betrieb der Aufbereitungsanlage 1 strömt das Schüttgut 2 durch die Zuführleitung 12 und die Entfernungseinrichtung 17 in die Schneckenmaschine 3. Die Induktionsspule 14 ist in Betrieb. Das Siebelement 19 befindet sich in der Ruheposition außerhalb des Schüttgut-Förderstroms. Das Zuführen des Schüttguts 2 zu der Schneckenmaschine 3 erfolgt in einer Schutzgasatmosphäre. Hierzu wird der Zuführvorrichtung 4 über die Schutzgas-Zuführleitung 34 ein Schutzgas zugeführt.

Befindet sich in dem Schüttgut-Förderstrom ein Metallpartikel 13, so durchströmt dieses die Induktionsspule 14. Die Induktionsspule 14 erzeugt aufgrund des Metallpartikels 13 ein Detektionssignal S_{D}, das der Steuereinrichtung 37 bereitgestellt wird. Die Induktionsspule 14 erkennt Metallpartikel 13 aus eisenhaltigen Metallen, beispielsweise aus Stahl, oder aus nicht eisenhaltigen Metallen. Die Steuereinrichtung 37 wertet das Detektionssignal S_{D} hinsichtlich einer vordefinierten Mindest-Partikelgröße aus. Beispielsweise vergleicht die Steuereinrichtung 37 das Detektionssignal S_{D} mit einem vordefinierten Schwellwert und erkennt ein Metallpartikel 13 mit einer vordefinierten Mindest-Partikelgröße, wenn das Detektionssignal S_{D} den vordefinierten Schwellwert überschreitet. Entsprechend wird ein Metallpartikel 13 nicht erkannt, wenn das Detektionssignal S_{D} den vordefinierten Schwellwert nicht überschreitet.

Erkennt die Steuereinrichtung 37 anhand des Detektionssignals S_{D} ein Metallpartikel 13 mit einer vordefinierten Mindest-Partikelgröße, so erzeugt die Steuereinrichtung 37 ein erstes Ansteuersignal S_{B1}, das den Betätigungsantrieb 20 ansteuert. Der Betätigungsantrieb 20 verfährt daraufhin das Siebelement 19 in einer ersten Verfahrrichtung 38 aus der Ruheposition in eine Betriebs- bzw. Fangposition, in der sich das Siebelement 19 in dem Schüttgut-Förderstrom befindet. Das strömende Schüttgut 2 und das detektierte Metallpartikel 13 trifft somit auf das Siebelement 19. Hierzu ist ein Abstand L zwischen der Induktionsspule 14 und dem Siebelement 19 derart gewählt, dass eine Förderzeit Δt_{S} des Metallpartikels 13 von der Induktionsspule 14 bis zu dem Siebelement 19 kleiner als eine Verfahrzeit Δt_{V} des Siebelements 19 von der Ruheposition in die Betriebsposition ist. Die durchschnittliche Schüttgut-Partikelgröße sowie die maximale Schüttgut-Partikelgröße ist deutlich kleiner als die zulässige Partikelgröße eines die Schneckenmaschine 3 schädigenden Metallpartikels 13. Dementsprechend ist die Mindest-Partikelgröße bzw. eine zulässige Partikelgröße eines detektierten Metallpartikels 13 größer als die durchschnittliche und maximale Schüttgut-Partikelgröße. Die minimale Querschnittsabmessung D der Durchtrittsöffnungen 21 ist so gewählt, dass das Schüttgut 2 durch die Durchtrittsöffnungen 21 treten kann, wohingegen ein schädliches Metallpartikel 13 nicht durch die Durchtrittsöffnungen 21 treten kann. Das auf das Siebelement 19 treffende Schüttgut 2 tritt somit durch die Durchtrittsöffnungen 21 und wird trotz des in dem Schüttgut-Förderstrom befindlichen Siebelements 19 weiter der Schneckenmaschine 3 zugeführt. Demgegenüber wird das detektierte und für die Schneckenmaschine 3 schädliche Metallpartikel 13 von dem Siebelement 19 gestoppt, sodass dieses nicht in die Schneckenmaschine 3 gelangt. Ist das Siebelement 19 magnetisiert und das Metallpartikel 13 aus einem magnetisierbaren Metall, so wird das Metallpartikel 13 zusätzlich aufgrund der wirkenden Magnetkräfte gestoppt und gehalten. Dadurch, dass die Querschnittsform Q_{S} des Siebelements 19 die Querschnittsform Q_{Z} der Zuführleitung 12 überdeckt, ist sichergestellt, dass der Schüttgut-Förderstrom vollständig auf das Siebelement 19 trifft.

Das erste Ansteuersignal S_{B1} definiert einen Startzeitpunkt t₀, ab dem nach einer vordefinierten Zeitdauer Δt von der Steuereinrichtung 37 ein zweites Ansteuersignal S_{B2} erzeugt wird. Mit dem zweiten Ansteuersignal S_{B2} wird erneut der Betätigungsantrieb 20 angesteuert, der das Siebelement 19 in einer zweiten Verfahrrichtung 39 aus der Betriebsposition in die Ruheposition verfährt. Die Zeitdauer Δt ist so gewählt, dass das detektierte Metallpartikel 13 einerseits sicher auf das Siebelement 19 trifft und andererseits das Siebelement 19 sich nicht unnötig lange in dem Schüttgut-Förderstrom befindet. Die Zeitdauer Δt beträgt zwischen 0,5 s und 3 s, insbesondere zwischen 1 s und 2 s. Die Begrenzungswand 24 verhindert, dass bei der Verfahrbewegung das auf dem Siebelement 19 befindliche Metallpartikel das Siebelement 19 wieder verlässt und in den Schüttgut-Förderstrom gelangt. Entsprechendes gilt für eine erneute Verfahrbewegung in der ersten Verfahrrichtung 38, wenn das Metallpartikel 13 nicht vorher von dem Siebelement 19 entfernt wurde.

Schüttgut 2, das sich in der Ruheposition des Siebelements 19 noch auf den Längsstreben 22 oder Querstreben 23 befindet, kann beispielsweise durch Vibrationen in den Bereich der Durchtrittsöffnungen 21 gelangen und durch das Siebelement 19 treten. Dieses Schüttgut 2 trifft auf den schräg verlaufenden Boden 33 und wird wieder dem Schüttgut-Förderstrom zugeführt.

Das in dem Siebelement 19 befindliche Metallpartikel 13 kann unmittelbar nach Rückkehr des Siebelements 19 in die Ruheposition entfernt werden oder das Metallpartikel 13 kann zunächst auf dem Siebelement 19 verbleiben bis eine Betriebsunterbrechung der Aufbereitungsanlage 1 ansteht und dann entfernt werden, wobei bis zu der Betriebsunterbrechung - falls erforderlich - weitere Metallpartikel 13 aus dem Schüttgut-Förderstrom entfernt werden. Durch die Schutzgasatmosphäre ist ein manuelles Entfernen des Metallpartikels 13 nur im Stillstand der Schneckenmaschine 3 möglich. Das Öffnen des Abdeckelements 29 führt zu einer Abschaltung der Schneckenmaschine 3 und zu einer Unterbrechung des Schüttgut-Förderstroms vor der Zuführvorrichtung 4.

Das auf dem Siebelement 19 befindliche Metallpartikel kann durch das Sichtfenster 30 gesichtet werden. Zum Entfernen wird das Abdeckelement 29 geöffnet. Der geöffnete Zustand des Abdeckelements 29 wird durch das Detektionselement 32 erkannt, das ein Zustandssignal S_{Z} an die Steuereinrichtung 37 übermittelt. Aufgrund des Zustandssignals S_{Z} wird das Absperrventil 35 angesteuert, das die Schutzgas-Zuführleitung 34 absperrt. Darüber hinaus wird die Entgasungsöffnung 36 geöffnet und die Schneckenmaschine 3 sowie der Schüttgut-Förderstrom gestoppt. Weiterhin deaktiviert die Steuereinrichtung 37 aufgrund des Zustandssignals S_{Z} den Betätigungsantrieb 20. Hierzu wird die Erzeugung des ersten Ansteuersignals S_{B1} unterbunden. Das Metallpartikel 13 kann nun aus dem Siebelement 19 entfernt werden oder es kann das Siebelement 19 getauscht werden. Entsprechendes gilt, wenn sich mehrere Metallpartikel 13 auf dem Siebelement 19 befinden. Anschließend wird die Öffnung 31 durch das Abdeckelement 29 wieder gasdicht verschlossen.

Der verschlossene Zustand des Abdeckelements 29 wird wiederum durch das Detektionselement 32 erkannt, das ein entsprechendes Zustandssignal S_{Z} an die Steuereinrichtung 37 übermittelt. Die Steuereinrichtung 37 überführt die Zuführvorrichtung 4 und die Schneckenmaschine 3 wieder in den Normalbetrieb. Insbesondere wird der Betätigungsantrieb 20 wieder aktiviert und durch Verschließen der Entgasungsöffnung 36 und Öffnen des Absperrventils 35 wieder Schutzgas zu der Zuführvorrichtung 4 zugeführt. Anschließend wird Schüttgut 2 in die Zuführvorrichtung 4 zugeführt.

Die erfindungsgemäße Zuführvorrichtung 4 ermöglicht somit einerseits eine einfache und zuverlässige Entfernung von Metallpartikeln 13, die die nachgeordnete Schneckenmaschine 3 schädigen würden. Andererseits ermöglicht die Zuführvorrichtung 4 eine kontinuierliche Zuführung von Schüttgut 2 mit einer möglichst konstanten Förderrate in die Schneckenmaschine 3.

## Patentansprüche

1. Zuführvorrichtung zum Zuführen von Schüttgut in eine Schneckenmaschine, mit
- einer Zuführleitung (12) zum Führen eines in einer Förderrichtung (5) strömenden Schüttguts (2),
- einer Induktionsspule (14) zum Detektieren eines Metallpartikels (13) in dem Schüttgut (2),
- einer Entfernungseinrichtung (17) zum Entfernen des detektierten Metallpartikels (13) aus dem Schüttgut (2), und
- einer Steuereinrichtung (37) zum Ansteuern der Entfernungseinrichtung (17),
**dadurch gekennzeichnet,**
**dass** die Entfernungseinrichtung (17) ein mittels eines Betätigungsantriebs (20) der Zuführvorrichtung verlagerbares Siebelement (19) mit einer Vielzahl von Durchtrittsöffnungen (21) für das Schüttgut (2) aufweist.

2. Zuführvorrichtung nach Anspruch 1, **dadurch gekennzeichnet, dass** das Siebelement (19) mittels des Betätigungsantriebs (20) quer zu der Förderrichtung (5) verfahrbar ist.

3. Zuführvorrichtung nach Anspruch 1 oder 2, **dadurch gekennzeichnet, dass** die Durchtrittsöffnungen (21) jeweils eine polygonale Querschnittsform haben.

4. Zuführvorrichtung nach einem der Ansprüche 1 bis 3, **dadurch gekennzeichnet,**
**dass** die Durchtrittsöffnungen (21) jeweils eine minimale Querschnittsabmessung D haben, wobei gilt: 1 mm ≤ D ≤ 12 mm, insbesondere 2 mm ≤ D ≤ 8 mm, insbesondere 3 mm ≤ D ≤ 7 mm, und insbesondere 4 mm ≤ D ≤ 6 mm.

5. Zuführvorrichtung nach einem der Ansprüche 1 bis 4, **dadurch gekennzeichnet,**
**dass** das Siebelement (19) an einer stromaufwärtigen Seite von einer Begrenzungswand (24) seitlich begrenzt ist.

6. Zuführvorrichtung nach einem der Ansprüche 1 bis 5, **dadurch gekennzeichnet,**
**dass** das Siebelement (19) eine Querschnittsform (Qs) aufweist, die eine Querschnittsform (Qz) der Zuführleitung (12) überdeckt.

7. Zuführvorrichtung nach einem der Ansprüche 1 bis 6, **dadurch gekennzeichnet,**
**dass** das Siebelement (19) magnetisiert ist.

8. Zuführvorrichtung nach einem der Ansprüche 1 bis 7, **dadurch gekennzeichnet,**
**dass** die Steuereinrichtung (37) derart ausgebildet ist, dass ein Ansteuersignal (S_{B1}) zum Verlagern des Siebelements (19) erzeugt wird, wenn mittels der Induktionsspule (14) ein Metallpartikel (13) mit einer vordefinierten Mindest-Partikelgröße detektiert wurde.

9. Zuführvorrichtung nach einem der Ansprüche 1 bis 8, **dadurch gekennzeichnet,**
**dass** die Steuereinrichtung (37) derart ausgebildet ist, dass bei Detektion eines Metallpartikels (13) ein erstes Ansteuersignal (S_{B1}) zum Verlagern des Siebelements (19) in das Schüttgut (2) und nach einer vordefinierten Zeitdauer ein zweites Ansteuersignal (S_{B2}) zum Verlagern des Siebelements (19) aus dem Schüttgut (2) erzeugt wird.

10. Zuführvorrichtung nach einem der Ansprüche 1 bis 9, **dadurch gekennzeichnet,**
**dass** die Entfernungseinrichtung (17) ein Gehäuse (18) aufweist, in dem das Siebelement (19) verlagerbar ist, und
**dass** das Gehäuse (18) insbesondere ein Sichtfenster (30) zur Sichtung eines in dem Siebelement (19) befindlichen Metallpartikels (13) aufweist.

11. Zuführvorrichtung nach Anspruch 10, **dadurch gekennzeichnet,**
**dass** das Gehäuse (18) eine Öffnung (31) zur Entfernung eines auf dem Siebelement (19) befindlichen Metallpartikels (13) aufweist,
**dass** die Öffnung (31) durch ein Abdeckelement (29) verschließbar ist, insbesondere gasdicht verschließbar ist.

12. Zuführvorrichtung nach Anspruch 11, **dadurch gekennzeichnet,**
**dass** die Entfernungseinrichtung (17) einen Detektionselement (32) zum Detektieren eines geöffneten Zustands des Abdeckelements (29) aufweist,
**dass** die Steuereinrichtung (37) insbesondere derart ausgebildet ist, dass bei geöffnetem Zustand des Abdeckelements (29) ein Verlagern des Siebelements (19) deaktiviert ist.

13. Zuführvorrichtung nach einem der Ansprüche 1 bis 12, **gekennzeichnet durch** eine Schutzgas-Zuführleitung (34).

14. Aufbereitungsanlage zur Aufbereitung von Schüttgut mit
- einer Schneckenmaschine (3), und
- einer Zuführvorrichtung (4) nach einem der Ansprüche 1 bis 13, die in die Schneckenmaschine (3) mündet.

15. Verfahren zum Zuführen von Schüttgut in eine Schneckenmaschine, umfassend folgende Schritte:
- Führen von strömenden Schüttgut (2) mittels einer Zuführleitung (12),
- Detektieren eines im Schüttgut (2) befindlichen Metallpartikels (13) mittels einer Induktionsspule (14),
- Entfernen des detektierten Metallpartikels (13) aus dem Schüttgut (2) mittels eines Siebelements (19), das mittels eines Betätigungsantriebs (20) verlagert wird, wobei während des Entfernens das Schüttgut (2) durch eine Vielzahl von in dem Siebelement (19) ausgebildeten Durchtrittsöffnungen (21) tritt und der Schneckenmaschine (3) zugeführt wird.

## Claims

1. Feeding apparatus for feeding bulk material into a screw machine, having
- a feed pipe (12) for conducting a bulk material (2) flowing in a delivery direction (5),
- an induction coil (14) for detecting a metal particle (13) in the bulk material (2),
- a removal device (17) for removing the detected metal particle (13) from the bulk material (2), and
- a control device (37) for activating the removal device (17),
**characterized**
**in that** the removal device (17) has a displaceable screen element (19) by means of an actuating drive (20) of the feeding apparatus having a multiplicity of through-openings (21) for the bulk material (2).

2. Feeding apparatus according to Claim 1, **characterized in that** the screen element (19) is movable transversely to the delivery direction (5) by means of the actuating drive (20).

3. Feeding apparatus according to Claim 1 or 2, **characterized in that** the through-openings (21) each have a polygonal cross-sectional shape.

4. Feeding apparatus according to one of Claims 1 to 3, **characterized in that** the through-openings (21) each have a minimum cross-sectional dimension D, wherein 1 mm ≤ D ≤ 12 mm, in particular 2 mm ≤ D ≤ 8 mm, in particular 3 mm ≤ D ≤ 7 mm, and in particular 4 mm ≤ D ≤ 6 mm.

5. Feeding apparatus according to one of Claims 1 to 4, **characterized in that** the screen element (19) is laterally bounded by a boundary wall (24) on an upstream side.

6. Feeding apparatus according to one of Claims 1 to 5, **characterized in that** the screen element (19) has a cross-sectional shape (Qs) which covers a cross-sectional shape (Qz) of the feed pipe (12).

7. Feeding apparatus according to one of Claims 1 to 6, **characterized in that** the screen element (19) is magnetized.

8. Feeding apparatus according to one of Claims 1 to 7, **characterized in that** the control device (37) is configured such that an activation signal (S_{B1}) for displacing the screen element (19) is generated when a metal particle (13) having a predefined minimum particle size has been detected by means of the induction coil (14).

9. Feeding apparatus according to one of Claims 1 to 8, **characterized in that** the control device (37) is configured such that, when a metal particle (13) is detected, a first activation signal (S_{B1}) for displacing the screen element (19) into the bulk material (2) is generated and, after a predefined duration, a second activation signal (S_{B2}) for displacing the screen element (19) out of the bulk material (2) is generated.

10. Feeding apparatus according to one of Claims 1 to 9, **characterized**
**in that** the removal device (17) has a housing (18) in which the screen element (19) is displaceable, and
**in that** the housing (18) has in particular a viewing window (30) for viewing a metal particle (13) located in the screen element (19).

11. Feeding apparatus according to Claim 10, **characterized**
**in that** the housing (18) has an opening (31) for removing a metal particle (13) located on the screen element (19), and
**in that** the opening (31) is closable, in particular in a gastight manner, by a covering element (29).

12. Feeding apparatus according to Claim 11, **characterized**
**in that** the removal device (17) has a detection element (32) for detecting an open state of the covering element (29), and
**in that** the control device (37) is configured in particular such that, in the open state of the covering element (29), displacement of the screen element (19) is deactivated.

13. Feeding apparatus according to one of Claims 1 to 12, **characterized by** an inert-gas feed pipe (34).

14. Processing plant for processing bulk material, having
- a screw machine (3), and
- a feeding apparatus (4) according to one of Claims 1 to 13, which leads into the screw machine (3).

15. Method for feeding bulk material into a screw machine, comprising the following steps of:
- conducting flowing bulk material (2) by means of a feed pipe (12),
- detecting a metal particle (13) located in the bulk material (2) by means of an induction coil (14), and
- removing the detected metal particle (13) from the bulk material (2) by means of a screen element (19), which is displaced by means of an actuating drive (20), wherein, during removal, the bulk material (2) passes through a multiplicity of through-openings (21) formed in the screen element (19) and is fed to the screw machine (3).

## Revendications

1. Dispositif d'amenée permettant d'amener des matières en vrac dans une machine à vis sans fin, comprenant
- une conduite d'amenée (12) permettant de guider une matière en vrac (2) s'écoulant dans une direction de transport (5),
- une bobine d'induction (14) permettant de détecter une particule métallique (13) dans la matière en vrac (2),
- un dispositif d'extraction (17) permettant d'extraire la particule métallique (13) détectée de la matière en vrac (2), et
- un dispositif de commande (37) permettant de commander le dispositif d'extraction (17),
**caractérisé**
**en ce que** le dispositif d'extraction (17) comporte un élément de tamis (19) pouvant être déplacé au moyen d'une commande d'actionnement (20) du dispositif d'amenée, lequel élément est doté d'une pluralité d'ouvertures de passage (21) pour la matière en vrac (2).

2. Dispositif d'amenée selon la revendication 1, **caractérisé**
**en ce que** l'élément de tamis (19) peut être déplacé au moyen de la commande d'actionnement (20) transversalement à la direction de transport (5).

3. Dispositif d'amenée selon la revendication 1 ou 2, **caractérisé en ce que**
**en ce que** les ouvertures de passage (21) présentent chacune une forme en section transversale polygonale.

4. Dispositif d'amenée selon l'une des revendications 1 à 3, **caractérisé**
**en ce que** les ouvertures de passage (21) ont chacune une dimension de section transversale minimale D, où : 1 mm ≤ D ≤ 12 mm, en particulier 2 mm ≤ D ≤ 8 mm, en particulier 3 mm ≤ D ≤ 7 mm, et en particuier 4 mm ≤ D ≤ 6 mm.

5. Dispositif d'amenée selon l'une des revendications 1 à 4, **caractérisé**
**en ce que** l'élément de tamis (19) est délimité latéralement sur un côté amont par une paroi de délimitation (24).

6. Dispositif d'amenée selon l'une des revendications 1 à 5, **caractérisé**
**en ce que** l'élément de tamis (19) présente une forme en section transversale (Qs), qui couvre une forme en section transversale (Qz) de la conduite d'amenée (12).

7. Dispositif d'amenée selon l'une des revendications 1 à 6, **caractérisé**
**en ce que** l'élément de tamis (19) est magnétisé.

8. Dispositif d'amenée selon l'une des revendications 1 à 7, **caractérisé**
**en ce que** le dispositif de commande (37) est conçu de sorte qu'un signal de commande (S_{B1}) permettant de déplacer l'élément de tamis (19) est généré lorsqu'une particule métallique (13) avec une taille de particule minimale prédéfinie a été détectée au moyen de la bobine d'induction (14).

9. Dispositif d'amenée selon l'une des revendications 1 à 8, **caractérisé**
**en ce que** le dispositif de commande (37) est conçu de sorte que, lorsqu'une particule métallique (13) est détectée, un premier signal de commande (S_{B1}) permettant de déplacer l'élément de tamis (19) dans la matière en vrac (2) est généré, et après une durée prédéfinie, un second signal de commande (S_{B2}) permettant de déplacer l'élément de tamis (19) de la matière en vrac (2) est généré.

10. Dispositif d'amenée selon l'une des revendications 1 à 9, **caractérisé**
**en ce que** le dispositif d'extraction (17) comporte un boîtier (18) dans lequel l'élément de tamis (19) peut être déplacé, et
**en ce que** le boîtier (18) comporte en particulier une fenêtre de visualisation (30) permettant de visualiser une particule métallique (13) se trouvant dans l'élément de tamis (19).

11. Dispositif d'amenée selon la revendication 10, **caractérisé**
**en ce que** le boîtier (18) comporte une ouverture (31) permettant d'extraire une particule métallique (13) se trouvant sur l'élément de tamis (19),
**en ce que** l'ouverture (31) peut être fermée par un élément de recouvrement (29), peut en particulier être fermée de manière étanche au gaz.

12. Dispositif d'amenée selon la revendication 11, **caractérisé**
**en ce que** le dispositif d'extraction (17) comporte un élément de détection (32) permettant de détecter un état ouvert de l'élément de recouvrement (29),
**en ce que** le dispositif de commande (37) est en particulier conçu de sorte que, lorsque l'élément de recouvrement (29) est ouvert, un déplacement de l'élément de tamis (19) est désactivé.

13. Dispositif d'amenée selon l'une des revendications 1 à 12, **caractérisé par** une conduite d'amenée de gaz de protection (34).

14. Installation de transformation destinée au traitement de matières en vrac comprenant
- une machine à vis sans fin (3), et
- un dispositif d'amenée (4) selon l'une des revendications 1 à 13, qui débouche dans la machine à vis sans fin (3).

15. Procédé d'amenée de matières en vrac dans une machine à vis sans fin, comprenant les étapes suivantes :
- le guidage de la matière en vrac (2) s'écoulant au moyen d'une conduite d'amenée (12),
- la détection d'une particule métallique (13) se trouvant dans la matière en vrac (2) au moyen d'une bobine d'induction (14),
- l'extraction de la particule métallique (13) détectée de la matière en vrac (2) au moyen d'un élément de tamis (19) déplacé au moyen d'une commande d'actionnement (20), la matière en vrac (2) étant extraite, lors de l'extraction, par une pluralité d'ouvertures de passage (21) formées dans l'élément de tamis (19) et amenée dans la machine à vis sans fin (3).
